# EUROPEAN PATENT APPLICATION

(11) **EP 4 818 024 A1**
(43) Date of publication of application: **07.10.2026**
(21) Application number: 25472020.4
(22) Date of filing: 21.08.2025
(51) Int. Cl.: B63B 32/10, B29C 44/02, B29C 44/12, B29C 44/56, B63B 32/57, B63B 32/59

(54) **SURFBOARD MADE OF POLYMER BODY WITH PROTECTIVE SHELL AND ITS MANUFACTURING METHOD**

(71) Applicant: Daisy Technology Eood, 1113 Sofia (BG)
(72) Inventor: Bachev, Alexander, 1113 Sofia (BG)
(74) Representative: Benatov, Samuil Gabriel

(57) **Abstract**

The surfboard according to the invention comprises a polymer body (1) and an outer protective shell (2). The body (1) is made of expanded waterproof two-component polyurethane foam having a closed cell structure and a density of 15 g/l to 60 g/l. The outer protective shell (2) is made of plastic with good adhesion to the polyurethane body (1) and resistance to UV rays, and is one or more interconnected shells (2.1, 2.2). Such a surfboard is strong, easy and cheap to manufacture.

## Description

### TECHNICAL FIELD

The invention relates to a surfboard used for watercrafts, for example hydrofoils.

### Prior art

The most widely used technology in the surf industry is composite technology for production of surfboards, which allows the production of surfboards with increased strength, in which cavities can be formed. Unlike other technologies, it offers the best specific weight, as well as very good rigidity and precise shapes. In its core, the composite board contains a lightweight, low-density material that provides fullness, such as lightweight expanded polystyrene (EPS) or another type of foam. This material is used because of its buoyancy and lightness, but the process of cutting and forming the core is laborious and requires high precision. Most often, a large block of the material is milled using a CNC milling machine to shape the expanded polystyrene. Another method for forming the core is by filling injection molds with EPS and shaping them to the desired shape. With this production option, significant costs must be foreseen for the manufacturing of the molds. Furthermore, production requires an expensive expanded polystyrene (EPS) injection molding machine or renting it from a factory, which is also expensive.

Once the core is ready, a composite hard shell is built around it, providing structural strength and a waterproof layer over the EPS. This shell is produced by applying layers of fiberglass or other composite fibers such as carbon or Kevlar, which are coated with resin. This process, called lamination, adds strength and rigidity to the surfboard.

The same composite technology can utilize different base materials. Instead of EPS foam, polyurethane foam can be used for the core of the board, and then the lamination process again uses fiberglass and carbon, but the bonding agent is polyester resin.

Working with composite materials requires special skills and precautions, as resins can be toxic. It is also possible to use vacuum infusion lamination, in which the board is placed in a plastic bag. The air in the bag is removed and a precalculated system is used to inject resin, which flows around and adheres to the board. An alternative method is to use a mold and preimpregnated with resin fiberglass. After the composite materials are applied, the board needs to go through a curing process, in which the resin goes into a solid state. This usually requires time and energy, and sometimes specific environmental conditions, such as temperature and humidity, to ensure that the curing is uniform and effective. Once the composite materials have cured, the board is sanded to give its final shape. This stage again requires a lot of manual labor and attention to detail. Depending on the chosen construction, the lamination, drying and sanding processes can often be repeated in several rounds until the finished shell is achieved. At the end of the process, the surfboard is painted and decorated according to the client's requirements and the brand's standards.

The entire process is complex, multi-step and requires a significant amount of resources, time and human labor, including electricity to operate the machines and to heat the rooms during curing, and it consumes a lot of raw materials. Also, production is labor-intensive, each step requiring qualified personnel. This leads to higher production costs and a longer time to make each surfboard. Additionally, the human factor in the process leads to opportunities for errors and inconsistency in production. An additional negative characteristic of the composite technology is that expensive, non-recyclable materials are used, of which a significant amount is regularly discarded in the process of work. Last but not least, composite surfboards are fragile and easily crack and break upon impact, which forces their users to take extraordinary care during use and transportation. If water penetrates through the crack, it can suck into the entire core of the board and subsequently it can cause the composite shell to delaminate, which is detrimental to the surfboard.

A new technology in surfboard construction is the production of boards from EPP material - expanded polypropylene. Unlike the EPS material, which has "open" cells and is permeated by water, the EPP material has "closed" cells, which makes it waterproof and eliminates the need for an external waterproof shell of the board. In addition, this material is impact resistant and elastically regains its shape after pressure. This makes it safer when falling on it and during collisions with other objects. The production of EPP products is carried out in injection molds attached to an EPP injection machine. The process looks like this. In the first step, the material is injected: After closing the mold, under conditions of high temperature and pressure, EPP granules are injected into the mold, creating the main structure of the board. High-temperature steam passes through pores in the mold and ensures adhesion of the material. This is followed by a shaping and drying process: The board is shaped in the mold and then it is left to stabilize, harden, and gain the necessary strength, as the accumulated from the steam water in it evaporates. In a final step, the board is completed with additional elements such as an anti-slip pad, handles, fins, and more.

If the mechanical requirements for a board made of EPP are high, the material cannot provide them and would break under high load. In such cases, a strong internal structure made of, for example, aluminum or plastic can be manufactured in advance. This structure is placed in the mold (injection mold) before injection and in this way the board is formed around it.

EPP technology has certain advantages over composite technology. The production time of an EPP surfboard is reduced to minutes, and if the drying and stabilization process is added - 2 days. The costs per unit board are noticeably lower, due to the lack of expensive materials such as fiberglass, carbon and resin, as well as the almost completely automated machine production without human labor. On the other hand, this technology also has a number of disadvantages. To begin with, the EPP injection molding machine and the peripheral devices are a serious investment of the order of millions of euros. The injection mold itself is also expensive to manufacture. The financial factor prevents the technology from spreading more seriously in the surf industry.

US6712657B1 discloses a board, for the manufacture of which ready-made blocks of polystyrene foam are used, which are shaped by milling or carving and hot layers of plastic are glued onto them. Since the body of the board is not made of sufficiently strong polyurethane foam, a prefabricated stringer is added to the body of the board - a hollow elongated object that runs from the nose of the board to the tail and connects the upper and lower halves (bottom and deck). The technology is labor-intensive and expensive.

Another known solution discloses a board having a stringer is made of plastic, having a hollow shape with through holes on both sides, the foam being filled through the stringer and passing through these side holes to the volume of the board. The technology is labor-intensive and expensive.

In order to popularize surfing sports worldwide, they need to become more accessible to people. It is imperative to come up with a fast, cheap, robust and efficient manufacturing technology that allows for significant strength and durability of products, which will help reduce production costs.

### SUMMARY OF THE INVENTION

The object of the invention is to provide an optimized surfboard structure, made of sufficiently strong material, which does not require the use of additional reinforcing elements, which structure is easy and cheap to manufacture, and which reduces the need for human personnel and resources for its production, and speeds up the production process itself.

A new technology for the production of a new structure of polyurethane foam surfboards with a plastic cosmetic outer layer is proposed. It uses a strong polyurethane foam that is injected into a mold and expanded, thus obtaining a shaped board with a uniform density and structure. The expansion process takes minutes and the only requirement as tooling equipment, apart from the mold, is a machine for dosing the material and a press that provides sufficient pressure on the mold so that it does not open from the pressure of the expanding foam.

Polyurethane foam comes in a variety of grades, densities, and chemical compositions. There are softer, looser, lower density chemical formulas that are open-celled and absorb water, and are not suitable for surf products, as they typically require stiffness and water resistance. The right grades of polyurethane foam for the surf industry are closed-celled, which are water resistant, denser, and stronger.

More specifically, the surfboard according to the invention comprises a polymer body made of expanded waterproof two-component polyurethane foam having a closed cell structure and a density of 15 g/l to 60 g/l. The polymer body has an outer protective shell made of plastic with good adhesion to the polyurethane body and resistance to UV rays, and is one or more interconnected shells. The stress from the use of the board is borne by the foam itself, and not by the plastic shell. The shell provides additional water resistance and protects against mechanical damage of the surface of the board.

In a preferred embodiment of the invention, the protective shell is made of plastic with a thickness of 0.5 to 4 mm, preferably 2 mm to 3 mm.

In a preferred embodiment of the invention, the protective shell hermetically encloses the board's body on all sides.

In a preferred embodiment of the invention, the board also comprises a reinforcing element in the body in the form of a chassis, covered by the polyurethane foam of the body.

In one embodiment, the chassis is made of polyurethane foam or rigid polyurethane with a density of 80g/l to 1190g/l.

In another embodiment, the chassis is made of aluminum.

In a preferred embodiment of the invention, additional plastic parts and fasteners are fixed to the board's body.

In a preferred embodiment of the invention, the board's body has at least one cavity for accommodating electronic components and/or batteries, which cavity is open on at least one side of the board, and the surfaces of the cavity are covered by the protective shell.

According to the invention, a method for manufacturing a surfboard is also provided, comprising the following steps:
- Creating a three-dimensional model of the board, which is used to create a mold having negative opposite shape to the board;
- Making a mold, of at least two parts, having the shape and dimensions of the board, with technological through holes for polyurethane injection;
- Placing and closing the mold in a press;
- Molding the body in the closed mold by injecting through injection molding machine into the mold the material, which is a waterproof two-component polyurethane having a closed cell structure and a density of 15g/l to 60g/l, wherein the two components of the material are mixed by the machine immediately before injection into the mold, and polymerize and expand to the final volume and density within minutes.
- After shaping the body, the mold is opened and the body is allowed to stabilize for a period of time depending on the polyurethane material used;
- A protective layer is either placed in advance in the mold before the polyurethane body is expanded as prefabricated plastic shells, or it is additionally glued onto the surface of the finished hardened body as a protective coating.

In a preferred embodiment of the method, the shells of the protective layer are made of plastic with a thickness of 0.5 to 4 mm, preferably from 2 mm to 3 mm. In a preferred embodiment of the method, before injecting polyurethane into the mold, a prefabricated reinforcing chassis is placed in the mold, after which the polyurethane body material expands and fills the remaining around the chassis cavity in the mold.

In a preferred embodiment of the method, the chassis is made of polyurethane having a density of 80 g/l to 1190 g/l, which is polymerized in advance in a smaller mold than that of the body, corresponding to the shape and dimensions of the chassis.

In a preferred embodiment of the method, cavities open on at least one side are formed in the board's body and/or the chassis made of polyurethane, by means of protrusions on the board's body mold and/or the chassis mold.

In a preferred embodiment of the method, prior to expanding the body, additional plastic parts and fastening elements for the board are placed in the mold, which, after polymerization of the polyurethane, adhere to the body, under the protective layer.

Compared to the classic composite lamination technology, the proposed technology has much fewer steps and production time, making it easier and faster. Unlike a composite surfboard, which is produced in many stages over a period of several days to a month, the newly proposed technology reduces the production time to less than 1 day. On the other hand, the materials used are precisely dosed and there is practically no waste. Another advantage of the technology of strong polyurethane and plastic shell is the reduced manual labor, which is expensive and prone to production errors and lack of uniformity between products. The price of a finished surfboard using this technology is many times lower than a hand-made board using composite lamination technology.

Compared to the technology for producing EPP surfboards, the proposed technology of polyurethane foam and plastic shell has similar production times. The disadvantage of the EPP technology, however, is the significantly higher initial investment in a more complex mold, as well as the expensive investment in purchasing an injection molding machine for EPP products or renting one in a factory. Last but not least, unlike EPP and composite technology for surfboards, in the production of polyurethane foam boards there is no high electricity consumption for heating drying and curing rooms, generating steam and pressure and subsequent cooling. This makes the innovative technology much more efficient in terms of production costs.

Fast production leads to higher productivity, the ability to quickly react to new market trends, easier and more accurate planning of production quantities, as well as a decrease in production costs and storage costs. Eliminating the subjective human factor and reducing the possibility of making mistakes and achieving uniformity in production are prerequisites for high quality and customer satisfaction.

### DESCRIPTION OF THE ATTACHED FIGURES

The invention is explained in more detail through preferred embodiments, given as non-limiting the scope of the invention examples, with reference to the attached figures, where:
Figure 1 is a cross-sectional top view of a surfboard according to a preferred embodiment of the invention with a shaped chassis.
Figure 2 is a cross-sectional side view of the surfboard of Figure 1 along line A-A, according to a preferred embodiment of the invention with a shaped chassis.
Figure 3 is a cross-sectional top view of a surfboard without a shaped chassis.
Figure 4 is a cross-sectional side view of the surfboard without a shaped chassis of Figure 3 along line B-B.
Figure 5 is a profile view of a preferred embodiment of the chassis according to the invention.
Figure 6 is a cross-sectional top view of a surfboard with a shaped cavity that is closed by a lid, according to a preferred embodiment of the invention.
Figure 7 is a cross-sectional rear view of the surfboard of Figure 6 along line B-B, showing the protective shell.

### Exemplary embodiment and application of the invention

The surfboard according to the invention, as shown in the attached figures, consists of a polymer body 1, which is made of expanded waterproof two-component polyurethane (PU) foam having a closed cell structure and a density of 15 g/l to 60 g/l, for example 20, 30, 40, 50 or 60 g/l.

The two-component polyurethane foam is composed of a first component, which is a nucleophilic component, and a second component, which is a reactive chemical. For example, the first component can be a mixture of polyols containing catalysts, additives, surfactants and blowing agents, and the second component can be methylene diphenyl diisocyanate. More specific examples of the components are:
Variant 1: the first component is a blend of polyols based on renewable polyols derived from natural oils and recyclable as waste polyethylene terephthalate, and fourth generation blowing agents, and the second component is a polymeric isocyanate to produce a closed-cell rigid polyurethane (PUR) foam.
Variant 2: the first component is a mixture of polyols containing catalysts, additives, surfactants and foaming agents, and the second component is methylene diphenyl diisocyanate.

A more environmentally friendly, but lower-performance alternative to isocyanates are non-isocyanate polyurethanes (amines), which react with cyclic carbonates instead of polyols. The reaction between them forms polyurethane bonds.

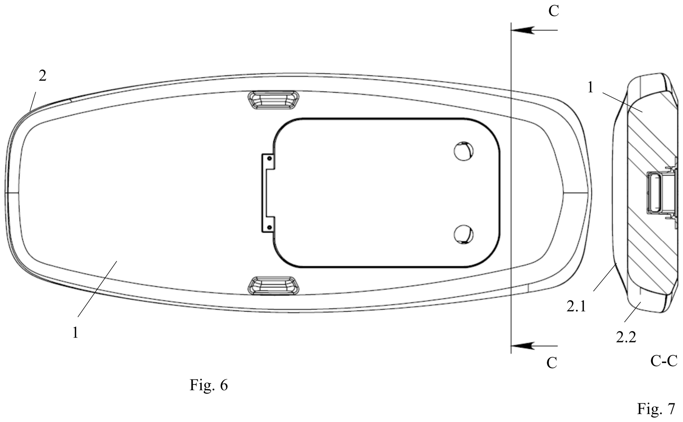

Although the foam selected for production is waterproof, for the good appearance of the board and to protect the foam from damage, it is necessary to cover the body with a protective layer that is impact resistant and not easily damaged by hard objects. The proposed technology uses an outer protective shell 2, shown in Figs. 6 and 7. The outer protective shell 2 is made of plastic with good adhesion to the polyurethane body 1 and resistance to UV rays, and consists of one or more thin shells connected to each other, for example two shells 2.1, 2.2, which completely cover the surfaces of the board.

This outer protective shell 2 can be separately manufactured by processes such as thermoforming, rotomolding or injection molding. The selected thermoforming plastic material for it can be, for example, ABS, PETG, PVC, fiber-reinforced plastics, PMMA, HIPS, PC, polycarbonate, high/low density polyethylene (HDPE/LDPE), or other suitable material, some materials requiring preliminary preparation of the material with a primer to ensure better adhesion to the polyurethane. The thickness of the layer of this material can be from 0.5 to 4 mm. Below 0.5 mm the strength of the layer is not sufficient, and above 4 mm it is unnecessarily thick and leads to an increase in the cost of the product and an increase in its weight. The preferred thickness is 2-3 mm. Since polyurethane foam has good adhesion to the listed plastics, in order to assemble the board it is sufficient to place the outer protective shell 2 on the surface of the mold before expanding the foam, and during the process the two materials are firmly adhered.

When forming the board, for example in a variant with two shells 2.1, 2.2, the two shells 2.1, 2.2 can overlap each other along the edge and glue can be applied to the overlap area, so that they are fixed to each other. In another variant, if they are next to each other, a connection line is formed between them, for example by ultrasonic bonding or filling the connection line with gel-like glue, and in this connection line an additional waterproof tape, for example made of rubber or thermoplastic plastic, is glued.

In a single-shell embodiment, the shell can be produced, for example, by rotomolding or blowmolding in a mold for the shell with a technological opening for introducing polyurethane foam.

Alternatively, it is possible to inject the foam into a mold for the board and then to glue a finished shell to the foam.

The functions of the plastic coating are several. First of all, it protects the board from water entering the interior. Despite the choice of waterproof foam, due to its rough structure, it tends to retain a surface layer of water and get dirty more easily. In addition, the surface of the foam is easily damaged and scratched, and does not have a good appearance. The durable plastic coating provides a durable, strong and aesthetic appearance of the product. Last but not least, the outer protective shell 2 allows local mechanical pressure on the board to be distributed over a larger area of the foam, which allows it to withstand the load and not deform.

Depending on the physical loads on a surfboard, different foam densities can be used. For example, SUP boards that are not subjected to heavy loads can be manufactured with a thin plastic shell and relatively lightweight, low-density polyurethane foam.

Surfboards that have an attached hydrofoil have much higher strength requirements to withstand the loads during their use. These are used for sailing sports such as kitesurfing and windsurfing, as well as in their electrified version - efoil. To ensure strength, a denser chemical formula of the foam can be used, making it harder and stronger.

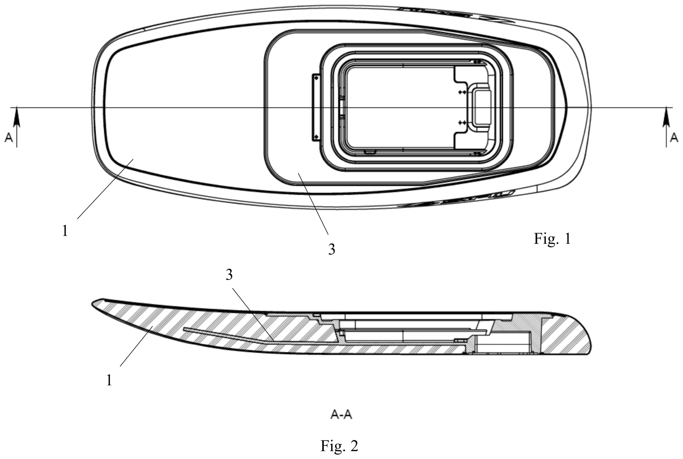

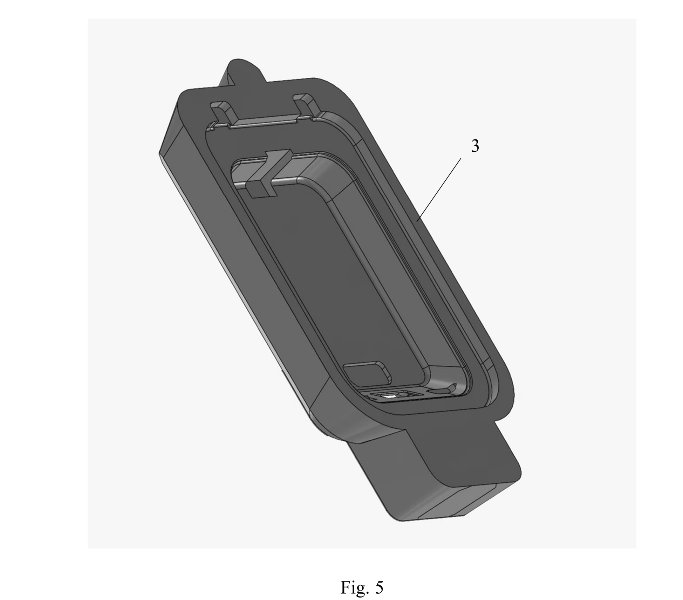

For the production of the board, a double expansion process can be used, in which a foam with a higher density and hardness in the range from 80g/l (rigid foam) to 1190g/l (rigid polyurethane) is expanded in a first mold, forming a very strong structure - chassis 3, shown in Figs. 1, 2 and 5, glued to the connecting fastening element for gripping the foil. In a second step, this structure is placed in the second mold, on the surface of which the plastic outer protective shell 2 is placed and the lower density main foam is injected inside, which forms the body 1 of the board. In this way, the rigid chassis 3 in the board bears the loads from the hydrofoil, and the remaining foam fills the shape of the board and optimizes its final weight. As an alternative, rigid plastics or metal can also be used as materials for the chassis 3. The chassis is relatively small, and in a preferred embodiment, it encases the hydrofoil attachment area and the battery compartment of the board, as shown in Fig. 5.

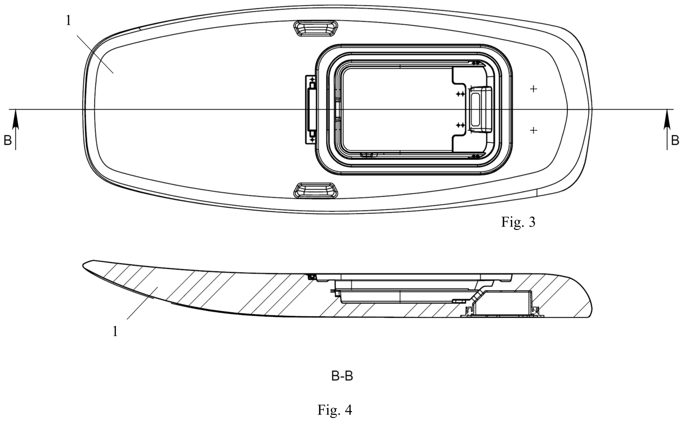

Accordingly, there are variants of a board structure with a uniform foam of one density without an internal chassis 3 for reinforcement, as shown in Figs. 2 and 4. Alternatively, there are variants of a board structure with an internal structure of denser polyurethane or polyurethane foam and an outer body 1 of lower density foam, as shown in Figs. 1 and 2.

After the chassis 3 is made, it is placed in the board's body mold on special chassis 3 holders that provide a gap on all sides around it, so that the board's body 1 is completely mold around the chassis 3. The holders can be fixed to the chassis 3, or they can be separate positioning feet that remain in the board's body 1 after the foam has expanded.

The board can have one or more cavities 4 for accommodating electronic components and/or batteries, which cavities are open on at least one side of the board, and the surfaces of these cavities 4 are covered by the protective shell 2. The cavities 4 can be further closed by a lid made of the material of the protective shell 2, as shown in Fig. 6.

Example technology for manufacturing a polyurethane board with an outer protective shell 2:
- Molds for thermoforming plastic are made, with which the upper and lower halves of the shell 2.1, 2.2 are vacuum-drawn from a thin sheet of plastic type: ABS, PETG, PVC or others.
- A mold is made into which the board will be injected. Its shape must be the same as that of the plastic shell.
- The two halves of the shells 2.1, 2.2 are placed in the two halves of the mold. If there are additional plastic parts and fasteners that are needed in the use of the board, such as a fastener for a fin or a handle, they are attached to the mold in their previously designated places, and after the polymerization of the polyurethane they are adhered to the body 1, under the protective layer.
   - If an additional, stiffer chassis 3 is needed, a second mold is made for it, where it is injected using a denser and stronger polyurethane. Once manufactured, it is placed in the large mold inside the plastic shell.
- The mold is closed and through one or more injection holes for foam injection, the previously calculated amount of foam dosed according to its chemical recipe to form the body 1 of the board is injected manually or by means of an injection machine with a dispenser into the interior of the mold. The foam is a waterproof two-component polyurethane having a closed cell structure and a density of 15g/l to 60g/l. In the machine injection molding process, the machine that performs this activity mixes the two components of the foam immediately before injection into the mold, during which the materials polymerize and expand to the final volume and density within minutes. In manual filling, the foam is mixed and stirred by hand, as well as manually filled into the mold before closing it.
- The mold is pressed in a closed position until the expansion and polymerization of the material is complete - a process that occurs at room temperature due to the chemical reaction between the two components, and takes from seconds to minutes, during which the polyurethane polymerizes and expands to its final volume and density, filling all cavities and adhering to the shells and other embedded parts, if any.
- The mold is opened and the board is removed from it. The board can be stored outside the mold until it has completely hardened, which takes several hours. Any waste foam, if any, in the area of the dividing line between the two halves of the shell 2.1, 2.2 is cut out. In order to hide the joint between the two halves, it is covered along its entire length with a rubber coating, for example rubber tape.
- Finishing elements such as handles, footstraps or fins are mounted to the board using preinstalled fasteners or connecting elements. An antislip EVA rubber pad can be glued to the surface on which the board is stepped.

It will be clear to those skilled in the art that various modifications of the surfboard are possible, which also are within the scope of the invention defined in the appended claims. All parts of the surfboard and the electric hydrofoil with such a board can be replaced with technically equivalent elements.

The reference numbers of the technical features are included in the claims solely for the purpose of increasing the comprehensibility of the claims and, therefore, these reference numbers have no limiting effect on the interpretation of the elements designated by these reference numbers.

## Claims

1. Surfboard comprising a polymer body (1) and an outer protective shell (2), **characterized in that** the body (1) is made of expanded waterproof two-component polyurethane foam having a closed cell structure and a density of 15 g/l to 60 g/l and that the outer protective shell (2) is made of plastic with good adhesion to the polyurethane body (1) and resistance to UV rays, and is one or more interconnected shells (2.1, 2.2).

2. Surfboard according to claim 1, **characterized in that** the protective shell (2) hermetically encloses the body (1) of the board on all sides.

3. Surfboard according to claim 1 or 2, **characterized in that** the protective shell is made of plastic with a thickness of 0.5 to 4 mm, preferably from 2 mm to 3 mm.

4. Surfboard according to any one of the preceding claims, **characterized in that** it also comprises a reinforcing element in the body in the form of a chassis (3) covered by the polyurethane foam of the body (1).

5. Surfboard according to claim 4, **characterized in that** the chassis (3) is made of polyurethane foam or rigid polyurethane with a density of 80g/l to 1190g/l.

6. Surfboard according to claim 4, **characterized in that** the chassis (3) is made of aluminum.

7. Surfboard according to any one of the preceding claims, **characterized in that** additional plastic parts and fastening elements are fixed to the body (1) of the board.

8. Surfboard according to any one of the preceding claims, **characterized in that** in the body (1) of the board there is at least one cavity (4) for accommodating electronic components and/or batteries, which cavity (4) is open on at least one side of the board, and the surfaces of the cavity (4) are covered by the protective shell (2).

9. Method for manufacturing a surfboard having structure as described in claims 1 to 8, comprising the following steps:
- Creating a three-dimensional model of the board, which is used to create a mold having a negative, opposite shape to the board;
- Making a mold, of at least two parts, having the shape and dimensions of the board;
- Placing and closing the mold in a press;
- Molding the body (1) in the closed mold by injecting with a PU injection machine into the mold the material, which is a waterproof two-component polyurethane having a closed cell structure and a density of 15g/l to 60g/l;
- After shaping the body (1), the mold is opened and the body (1) is allowed to stabilize for a period of time depending on the polyurethane material used;
- A protective layer forming a protective shell (2) is either placed in advance in the mold before the expansion of the polyurethane body as prefabricated shells (2.1, 2.2) made of plastic, or it is additionally glued onto the surface of the finished hardened body (1) as a protective coating.

10. Method for manufacturing a surfboard according to claim 9, **characterized in that** before injecting polyurethane into the mold, a prefabricated reinforcing chassis (3) is placed in the mold, after which the polyurethane material of the body (1) expands and fills the remaining around the chassis (3) cavity in the mold.

11. Method for manufacturing a surfboard according to claims 9 or 10, **characterized in that** the chassis (3) is prefabricated of polyurethane having a density of 80 g/l to 1190 g/l in a smaller mold than that of the body (1), corresponding to the shape and dimensions of the chassis (3).

12. Method for manufacturing a surfboard according to any one of claims 9 - 11, **characterized in that** cavities open on at least one side are formed in the body (1) of the board and/or the chassis (3) made of polyurethane, by means of protrusions of the mold for the body (1) of the board and/or for the chassis (3).

13. Method for manufacturing a surfboard according to any one of claims 9 - 12, **characterized in that** before expanding the body (1), additional plastic parts and fastening elements for the board are placed in the mold, which, after polymerization of the polyurethane, adhere to the body (1), under the protective layer.
